# EUROPEAN PATENT APPLICATION

(11) **EP 4 654 601 A1**
(43) Date of publication of application: **26.11.2025**
(21) Application number: 25177581.3
(22) Date of filing: 20.05.2025
(51) Int. Cl.: H04N 23/75, H04N 23/951

(54) **CAMERA SYSTEM**

(30) Priority: 24.05.2024 KR 20240067538
(71) Applicant: Otos Wing Co., Ltd., Seoul 08521 (KR)
(72) Inventor: HUH, Moon Young, 08521 Seoul (KR); HUH, Sung Won, 06084 Seoul (KR)
(74) Representative: Meissner Bolte Partnerschaft mbB

(57) **Abstract**

Provided is a camera system. The camera system includes a light shield disposed between a camera and a light source and including a light shield cartridge structure configured to control light entering the camera, an image capturing portion including the camera configured to obtain a plurality of image frames, and a processor configured to generate a plurality of combined preprocessed images based on two or more image frames selected from the plurality of image frames based on set criteria and synthesize the plurality of combined preprocessed images to generate at least one combined image.

## Description

### BACKGROUND

### 1. Field

The disclosure relates to a camera system for generating high quality images in a welding process.

### 2. Description of the Related Art

During a welding process, a camera system may generate a welding image of the welding process and transmit the welding image to a welding robot, a welding monitoring device, and the like, so that the welding status may be checked. In this case, because the camera system generates and provides a welding image of a portion adjacent to welding light, it is not easy to cause a specific welding situation, such as the welding environment, to be recognized. Therefore, it is necessary to generate and provide a high resolution image which allows the surrounding environment to be visually checked, so that the welding status may be accurately determined.

Furthermore, in a case in which welding images are generated, the camera system may experience ghosting, in which a strong light source of welding light is reflected from a lens or a sensor surface in the camera, thereby causing a plurality of images to be captured. Therefore, a technology that may reduce ghosting is also desired to generate more accurate welding images.

### SUMMARY

An embodiment of the disclosure is intended to process images obtained by a camera based on high dynamic range (HDR) technology to generate and provide a high resolution welding image which may clearly show the welding environment.

An embodiment of the disclosure is also intended to adjust the inclination of a light shield cartridge structure to minimize unnecessary light reflected from the camera back into the camera, thereby reducing ghosting that would be caused by unwanted light sources during generation of welding images.

An embodiment of the disclosure is also intended to include a blackening filter and a neutral density filter to control the blackening concentration or the neutral density according to the presence or absence or the intensity of welding light, thereby providing a welding image in which an amount of welding light is blocked without having to separately process the captured welding image.

The objectives of the disclosure are not limited to the above, and other problems and advantages of disclosure that are not mentioned may be understood by the following description and will be more clearly understood by embodiments of the disclosure. It will also be appreciated that the objectives and advantages of the disclosure may be realized by means and combinations thereof set forth in the claims.

A camera system according to an embodiment of the disclosure includes: a light shield disposed between a camera and a light source and including a light shield cartridge structure configured to control light entering the camera; an image capturing portion including the camera configured to obtain a plurality of image frames; and a processor configured to generate a plurality of combined preprocessed images based on two or more image frames selected from the plurality of image frames based on set criteria and synthesize the plurality of combined preprocessed images to generate at least one combined image.

The plurality of combined preprocessed images may include a first combined preprocessed image and a second combined preprocessed image, and the processor may generate the first combined preprocessed image based on two or more first image frames selected from the plurality of image frames based on the criteria, generate the second combined preprocessed image based on the two or more second image frames selected from the plurality of image frames based on the criteria, and synthesize the first combined preprocessed image and the second combined preprocessed image to generate the combined image.

The light shield cartridge structure may include a blackening filter and an anti-reflection coating layer disposed on at least one surface of the blackening filter.

The light shield cartridge structure may further include a neutral density filter disposed in front of the blackening filter.

The light shield cartridge structure may be disposed such that a virtual line perpendicular to a major surface of the light shield cartridge structure intersects a virtual line connecting a lens of the camera and the light source.

Other methods and other systems for implementing the disclosure and computer-readable recording media having recorded thereon a program for causing a computer to execute the methods may be further provided.

Aspects, features, and advantages other than the foregoing will become apparent from the following drawings, claims, and detailed description of the disclosure.

### BRIEF DESCRIPTION OF THE DRAWINGS

The above and other aspects, features, and advantages of certain embodiments of the disclosure will be more apparent from the following description taken in conjunction with the accompanying drawings in which:
FIG. 1 is a view illustrating a network environment of a camera system according to an embodiment of the disclosure;
FIG. 2 is a view illustrating an example configuration of the camera system according to an embodiment of the disclosure;
FIG. 3 is an exploded view illustrating a camera system according to an embodiment of the disclosure;
FIG. 4 is a conceptual view illustrating a camera system according to an embodiment of the disclosure;
FIGS. 5 to 7 are conceptual views specifically illustrating an example configuration of the camera system according to an embodiment of the disclosure;
FIG. 8 is a conceptual view illustrating another example of a camera system according to an embodiment of the disclosure;
FIG. 9 is a conceptual view illustrating another example of a camera system according to an embodiment of the disclosure;
FIG. 10 is a block diagram illustrating a method of controlling a filter in a camera system according to an embodiment of the disclosure;
FIG. 11 is a view illustrating an example in which a camera system according to an embodiment of the disclosure generates combined images; and
FIG. 12 is a view illustrating another example in which a camera system according to an embodiment of the disclosure generates combined images.

### DETAILED DESCRIPTION

The advantages and features of the disclosure and methods of implementing the same will be more readily understood by reference to the following detailed description of embodiments and the accompanying drawings. However, the disclosure should not be construed as being limited to the embodiments set forth herein, but may be embodied in many different forms and should be understood to include all modifications, equivalents, or substitutions that may be implemented in various other forms and that are within the scope of the ideas and techniques of the disclosure. The embodiments set forth below are provided so that the disclosure will be thorough and complete and will fully convey the concept of the disclosure to a person of ordinary knowledge in the art to which the disclosure belongs. In describing the disclosure, in case that it is determined that a detailed description of the related well-known technology may obscure the essence of the disclosure, the detailed description thereof will be omitted.

The terminologies used herein are for the purpose of describing particular embodiments only and are not intended to limit the disclosure. The singular forms are intended to include the plural forms as well, unless the context clearly indicates otherwise. It will be understood that the terms such as "comprise", "include", and "have", when used herein, specify the presence of stated features, numbers, steps, operations, elements, components, and/or combinations thereof but do not preclude the possibility of presence or addition of one or more other features, integers, steps, operations, elements, components, and/or combinations thereof. It will be understood that, although the terms such as "first" and "second", may be used to describe various elements, these elements should not be limited by these terms. These terms are used only to distinguish one element from another.

Furthermore, as used herein, the term such as "part" or "portion" may be a hardware component, such as a processor or a circuit, and/or a software component executed by a hardware component, such as a processor.

Hereinafter, embodiments according to the disclosure will be described in detail with reference to the accompanying drawings, in which identical or similar elements are given the same reference numerals, and repeated description thereof will be omitted.

In the following embodiments, the terms such as "first" and "second" are not intended to be limiting, but are used to distinguish one element from another.

In the following embodiments, the singular forms are intended to include the plural forms as well, unless the context clearly indicates otherwise.

In the following embodiments, the terms such as "comprise", "include", or "have" specify the presence of features or elements stated in the specification but do not preclude the possibility of addition of one or more other features or elements.

In a case that a particular embodiment may be implemented differently, a particular process order may be changed from the described order. For example, two sequentially described processes may be performed substantially at the same time or in an order opposite to the described order.

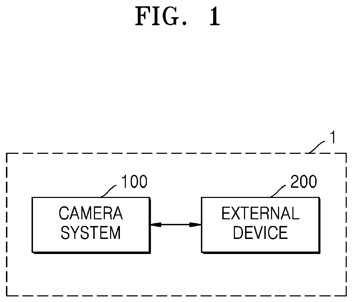

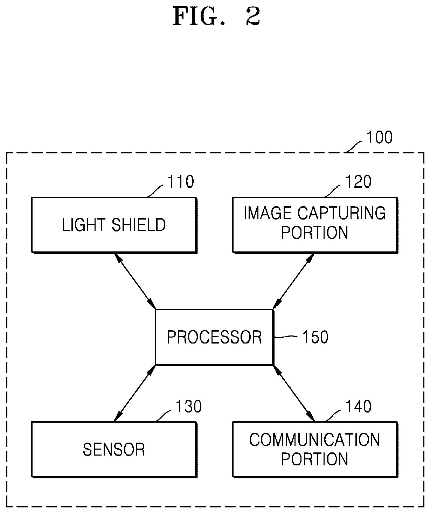

FIG. 1 is a view illustrating a network environment of a camera system according to an embodiment of the disclosure, and FIG. 2 is a view illustrating an example configuration of the camera system according to an embodiment of the disclosure.

Referring to FIG. 1, a network environment 1 of a camera system according to an embodiment of the disclosure may include a camera system 100 and an external device 200.

The camera system 100 according to an embodiment of the disclosure may generate a high resolution image of a work area and transmit the high resolution image to the external device 200, thereby allowing the work status to be easily checked. The work area may be, for example, but is not limited to, a welding area where a welding process is performed. Accordingly, the camera system 100 may be, but is not limited to, a camera system for welding, and may be any industrial camera system.

The camera system 100 may receive a feedback signal generated based on the high resolution image, and may operate in accordance with the feedback signal. The feedback signal may be a signal regarding the control of the camera system 100, for example, image capturing conditions of the camera in the camera system 100, whether or not the camera system 100 is operating, and the like.

The external device 200 may be, for example, but is not limited to, a welding robot, a welding monitoring device (e.g., a PC), a mobile terminal (e.g., a smartphone), a welding torch, welding goggles, and the like. The external device 200 may output a high resolution image received from the camera system 100, and may transmit a feedback signal to the camera system 100 to control the camera system 100 in case that the feedback signal generated based on the high resolution image is input.

The camera system 100 according to an embodiment of the disclosure may include a light shield 110, an image capturing portion 120, a sensor 130, a communication portion 140, and a processor 150.

The light shield 110 may be disposed between a camera and a light source, and may include a light shield cartridge structure which controls light entering the camera. The light shield cartridge structure may include a blackening filter and an anti-reflection coating layer disposed on at least one surface of the blackening filter. In an embodiment, the light shield cartridge structure may further include a neutral density filter disposed in front of the blackening filter.

The light shield cartridge structure may be positioned at an inclination between the camera and the light source so that the strong light source reduces unnecessary light reflected from the lens in the camera, thereby reducing ghosting. The inclination of the light shield cartridge structure may be fixed at a selected angle, but this is not intended to be limiting, and the inclination of the light shield cartridge structure may be adjusted by the processor 150.

The light shield 110 may further include a sensor filter (not shown). The sensor filter may be provided integrally with or separate from the light shield cartridge structure. The sensor filter may be disposed on a virtual line connecting the light source and the sensor 130 (e.g., an illuminance sensor), by which light entering the sensor may be controlled.

The image capturing portion 120 may include a camera which obtains a plurality of image frames of the work area. Here, the image frames may be, for example, welding image frames. The camera may obtain the plurality of image frames based on light that has passed through the light shield cartridge structure (or the light shield).

In an embodiment, the image capturing portion 120 may further include a thermographic camera, and may obtain thermal images using the thermographic camera.

The image capturing portion 120 may include, but is not limited to, a single camera, and may include one or more cameras.

The image capturing portion 120 may, under the control of the processor 150, repeatedly capture the images of the work area by varying the image capturing conditions, including the shutter speed, ISO sensitivity, gain value, and the like, of the camera.

The sensor 130 may sense various information about the work area, and may include a plurality of sensor modules configured to obtain various information. The sensor 130 may include an illuminance sensor which detects the intensity of light (e.g., the intensity of welding light or ambient light) in the work area. The sensor 130 may further include various types of sensors other than the illuminance sensor, such as a proximity sensor, a noise sensor, a video sensor, an ultrasonic sensor, and an RF sensor, to detect various changes associated with the environment of the welding work.

In an embodiment, the sensor 130 may detect, for example, welding information. The welding information may include, for example, a welding temperature, a welding direction, a welding inclination, a welding speed, and a gap between the workpiece and the welding torch for a real-time welding operation.

The communication portion 140 is configured to communicate with various external devices 200 using various types of wired and wireless communication methods. The communication portion 140 may include at least one of a Wi-Fi chip, a Bluetooth chip, a wireless communication chip, or an NFC chip. In particular, in a case in which a Wi-Fi chip or a Bluetooth chip is used, various connection information, such as an SSID and a session key, may be transmitted and received first, and various information may be transmitted and received after a communication connection is established using the connection information. The "wireless communication chip" refers to a chip which performs communication in accordance with various communication standards such as IEEE, Zigbee, 3rd generation (3G), 3rd generation partnership project (3GPP), and long term evolution (LTE). The NFC chip refers to a chip which operates in a near field communication (NFC) manner in the 13.56 MHz band among various RFID frequency bands such as 135 kHz, 13.56 MHz, 433 MHz, 860 to 960 MHz, and 2.45 GHz.

As the welding light is detected by the sensor 130, the processor 150 may control at least one of the blackening filter, the neutral density filter, or the sensor filter included in the light shield cartridge structure based on the intensity of the welding light.

The processor 150 may synthesize the plurality of image frames obtained by the camera to generate one or more combined images, and may transmit the one or more combined images to the external device 200 using the communication portion 140 as high resolution images. In this case, the processor 150 may generate the high resolution image using high dynamic range (HDR) technology and transmit the high resolution image to the external device 200, and in this manner, the processor 150 may accurately check the welding condition (e.g., information about the shape of a weld bead, the welding arc, and the surrounding environment other than the area adjacent to the welding light) through the high resolution image and provide a feedback.

In an embodiment, the processor 150 may generate a plurality of combined preprocessed images based on two or more image frames selected based on set criteria from a plurality of image frames obtained at set intervals, and may synthesize the plurality of combined preprocessed images to generate one or more combined images. The two or more image frames may be successive image frames in a chronological order. The processor 150 may generate the plurality of combined preprocessed images in parallel. Here, the set criteria may include, for example, the number of specified image frames, selecting image frames in each of which a pixel difference from another image frame (e.g., a previous image frame) is in a set range of pixel difference, changing the number of image frames based on image capturing conditions, and the like.

In an embodiment, the processor 150 may generate a first combined preprocessed image based on two or more first image frames selected from the plurality of image frames based on set criteria and a second combined preprocessed image based on two or more second image frames selected from the plurality of image frames based on set criteria. The two or more first image frames and the two or more second image frames may include a set number of the same image frames or more (or a set number of different image frames or more). The processor 150 may synthesize the first combined preprocessed images and the second combined preprocessed images to generate a combined image.

Furthermore, the processor 150 may transmit information detected by the sensor 130 (e.g., welding information) to the external device 200, thereby allowing the external device 200 to determine the situation of the work area.

In an embodiment, the processor 150 may detect a welding temperature using, for example, but not limited to, the sensor 130.

In an embodiment, in a case in which the image capturing portion 120 includes a thermographic camera, the processor 150 may synthesize a thermal image obtained by the thermographic camera and an image of the welding work site to obtain a temperature image of the work and may determine the welding temperature based on the temperature image.

The processor 150 may transmit each of the welding temperature detected by the sensor 130 and the welding temperature based on the temperature image to the external device 200, but may also calculate an average of the respective welding temperatures and transmit the average to the external device 200. In this case, the processor 150 may check whether or not the welding temperature exceeds a set temperature range, a level corresponding to the welding temperature, and the like, and may transmit the checked information to the external device 200.

In case that the difference between the welding temperature detected by the sensor 130 and the welding temperature determined based on the temperature image is equal to or greater than a set value, the processor 150 may generate and transmit notification information (e.g., an abnormality message) to the external device 200.

In an embodiment, the information transmitted to the external device 200 may be output in various forms, for example, via output portions (such as speakers and displays; not shown) of the camera system 100.

The processor 150 controls the overall operation of the camera system 100. The processor 150 may control the light shield 110, the image capturing portion 120, the sensor 130, the communication portion 140, and the like by executing programs stored in memory (not shown), thereby controlling the operation of the camera system 100.

The processor 150 may be implemented using at least one of an application specific integrated circuit (ASIC), a digital signal processor (DSP), a digital signal processing device (DSPD), a programmable logic device (PLD), a field programmable gate array (FPGA), a controller, a microcontroller, a microprocessor, or other electrical units for performing functions.

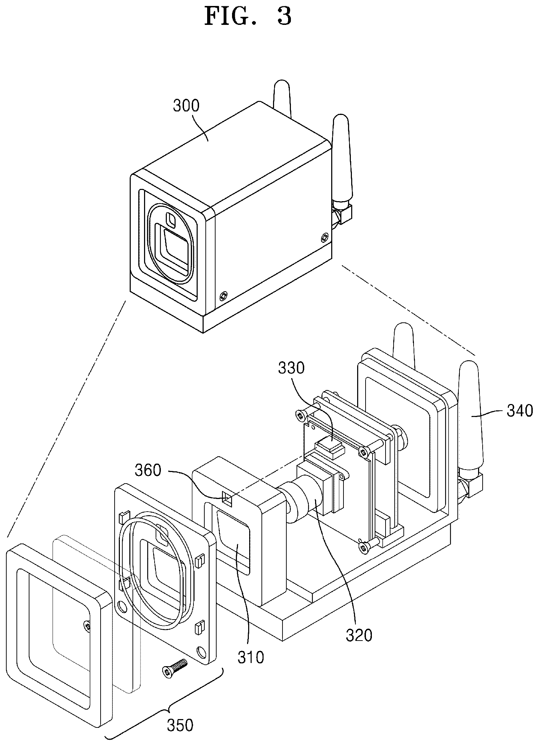

FIG. 3 is an exploded view illustrating a camera system according to an embodiment of the disclosure.

Referring to FIG. 3, a camera system 300 according to an embodiment of the disclosure may include a light shield 310, a camera 320, a sensor 330, a communication portion 340, and a processor (not shown). Here, the communication portion 340 may include, but is not limited to, a wireless antenna to support wireless communication with an external device, and may also support wired communication via of a cable.

The camera system 300 may further include a protection module 350 and a sensor filter 360.

The protection module 350 may include a protective glass and a protective frame which protects the front and rear of the protective glass. The protection module 350 may be disposed in front of the light shield 310. The protective glass of the protection module 350 is to be prepared for accidents such as sparks generated during welding operations, and a coating layer formed of a hydrophilic coating material or the like capable of preventing fogging or moisture may be provided on the front portion of the protective glass. The protection module 350 may prevent the light shield 310 from being damaged by external foreign matter.

The sensor filter 360 may be disposed on a side of the light shield 310. In an embodiment, the sensor filter 360 may be separate from, or provided integrally with, the light shield 310. The sensor filter 360 may be disposed on the same line as the sensor 330 disposed on a side of the camera 320 to control light incident on the sensor 330.

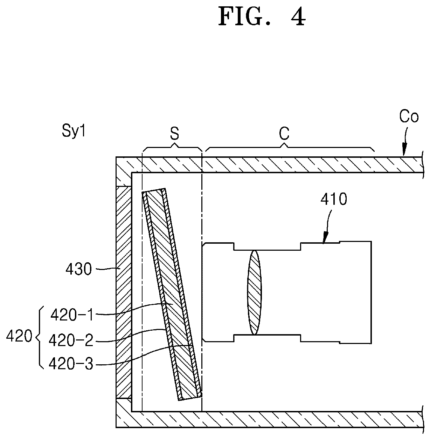

FIG. 4 is a conceptual view illustrating a camera system according to an embodiment of the disclosure.

Referring to FIG. 4, an embodiment of the disclosure may provide a camera system Sy1 which includes an image capturing portion C provided with a camera 410 which obtains image frames by capturing images of a welding area and a light shield S including a light shield cartridge structure 420 disposed between the camera 410 and a welding light source to control welding light entering the image capturing portion C (or the camera 410).

The camera system according to an embodiment may be implemented as a camera, a camera unit, a camera module, a camera device, or the like, but is not particularly limited to these examples.

As in the above structure, the light shield S may be disposed between the image capturing portion C and the welding light source to control the amount of welding light entering the image capturing portion C, thereby obtaining clear welding images.

The image capturing portion C according to an embodiment of the disclosure may further include other configurations for fixing and/or operating the camera 410 such as, but not particularly limited to, a camera mount (not shown) for holding the camera 410.

The light shield S according to an embodiment of the disclosure may further include other configurations for fixing the light shield cartridge structure 420 such as, but not particularly limited to, a structure holder (not shown) for holding the light shield cartridge structure 420.

The light shield cartridge structure 420 according to an embodiment of the disclosure may perform a function of blocking welding light generated during welding operations. In an optional embodiment, the light shield cartridge structure 420 may adjust a shading degree based on information about welding light (hereinafter, referred to as "welding light information") detected by a sensor (not shown). In another optional embodiment, the shading degree may be adjusted based on welding light information detected by a separate photosensor (not shown).

The light shield cartridge structure 420 according to an embodiment of the disclosure may include, for example, a liquid crystal panel (LCD) 420-1 as a blackening filter, the blackening concentration of which may be adjusted according to the alignment direction of liquid crystals. The LCD panel 420-1 may be implemented as various types of panels or LCD panels, such as a vertical alignment (VA) panel, a twist nematic (TN) panel, and an in-plane switching (IPS) panel. However, the LCD panel 420-1 is not limited to these examples, and any liquid crystal panel which may be readily selected by a person of ordinary knowledge in the art should be construed as falling within the scope of the disclosure.

The shading degree (or blackening concentration) of the light shield cartridge structure 420 according to an embodiment of the disclosure may be automatically adjusted according to the brightness of welding light. In case that the shading degree is automatically adjusted according to the brightness of the welding light as described above, the sensor (not shown) may be used.

The sensor (not shown) according to an embodiment of the disclosure may detect the intensity of welding light, obtain welding light information, convert information about the intensity of the welding light (hereinafter, referred to as "welding light intensity information") included in the welding light information into a selected electrical signal, and transfer the electrical signal to a processor (not shown), which may then control the shading degree (or blackening concentration) based on the light intensity of the welding light.

The light shield cartridge structure 420 according to an embodiment of the disclosure may change the shading degree of the liquid crystal panel 420-1 in real time to correspond to the intensity of light generated on the welding surface at a welding work site, and the image capturing portion C may capture a welding image in which an amount of welding light is blocked by the light shield cartridge structure 420 provided on the front portion.

Referring again to FIG. 4, the camera system Sy1 according to an embodiment of the disclosure may further include a cover Co which is disposed on an area outside the light shield cartridge structure 420 and covers an outer portion of the light shield cartridge structure 420. In an optional embodiment, the cover Co may cover both the light shield cartridge structure 420 and the image capturing portion C.

The cover Co according to an embodiment of the disclosure may include a light transmissive member (not shown), at least a portion of which is formed of a light transmissive material. Welding light may pass through the light transmissive member (not shown) and pass through the light shield cartridge structure 420, thereby allowing the image capturing portion C to capture a welding image.

The light transmissive member (not shown) according to an embodiment of the disclosure may include a cover plate 430 disposed on a front side of the light shield cartridge structure 420 to protect the light shield cartridge structure 420. The cover plate 430 may be light transmissive, include a resinous material, such as polycarbonate (PC) or acrylic, and be formed by injection molding or the like, but is not limited to these examples.

The light shield cartridge structure 420 according to an embodiment of the disclosure may include the LCD panel 420-1 and an anti-reflection coating layer disposed on at least one surface of the LCD panel. In an optional embodiment, the anti-reflection coating layer may include a first coating layer 420-2 and a second coating layer 420-3 disposed on a surface and an opposite surface of the LCD panel.

The camera system Sy1 according to an embodiment of the disclosure may further include, in the light shield cartridge structure 420, a neutral density filter which reduces the amount of light together with the LCD panel 420-1 which serves as a blackening filter. The neutral density filter may be disposed in front of, but not limited to, the blackening filter.

The camera system Sy1 according to an embodiment of the disclosure may receive a setting value for at least one item from the shading degree, a sensor sensitivity, and a zoom function, set the corresponding item based on the setting value, and output a set status, using a setting menu of the camera system.

Here, in an example, in case that a first setting value corresponding to any of first to tenth operations regarding the shading degree is input, the processor of the camera system may adjust the shading degree (or transmittance) of the light shield cartridge structure 420 based on the first setting value. In this case, the adjustment range of the shading degree may be in the range of, for example, a transmittance of 15% to 0.003%.

In an example, in case that a second setting value corresponding to any of the first to tenth operations regarding sensor sensitivity is input, the processor of the camera system may adjust the sensing sensitivity of the sensor (e.g., a photosensor or an illuminance sensor) based on the second setting value. For example, in case that the second setting value corresponding to the first operation is input, the processor of the camera system may cause the camera system to operate only in strong light equal to or greater than a set threshold, and in case that the second setting value corresponding to the tenth operation is input, the processor of the camera system may cause the camera system to operate continuously regardless of light intensity.

Furthermore, in an example, in case that a third setting value corresponding to any of "off", "on", and "auto" regarding the zoom function is input, the processor of the camera system may set the state of the zoom function based on the third setting value. The processor of the camera system may disable the operation of the zoom function (e.g., zooming in) in case that the third setting value corresponding to "off" is input, continue to enable the operation of the zoom function in case that the third setting value corresponding to "on" is input, and enable the operation of the zoom function only in a case in which the sensor (e.g., a photo sensor or an illuminance sensor) recognizes the welding light in case that the third setting value corresponding to "auto" is input.

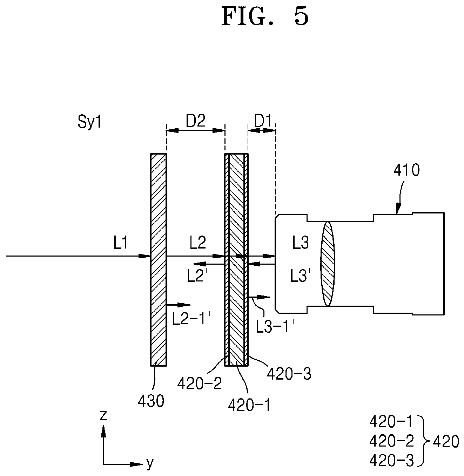

FIGS. 5 to 7 are conceptual views specifically illustrating an example configuration of the camera system according to an embodiment of the disclosure.

Referring to FIG. 5, ghosting may be minimized by reducing light reflected from the anti-reflection coating layers 420-2 and 420-3 disposed on at least one surface of the light shield cartridge structure 420, from welding light that has passed through the cover plate 430.

Specifically, by providing the first coating layer 420-2, in case that a portion of light L2 that has passed through the cover plate 430 is reflected L2', the amount of the reflected light portion (or welding light) L2' may be minimized to minimize the amount of welding light L2-1' that reaches and is reflected from the cover plate, thereby minimizing primary ghosting.

Furthermore, by providing the above structure, referring to FIG. 5, specifically, in a process in which welding light L3 that has passed through the light shield cartridge structure 420 is reflected L3' from the camera and then reflected L3-1' from another side of the light shield cartridge structure 420, the amount of reflected welding light may be minimized, thereby minimizing secondary ghosting.

The anti-reflection coating layers 420-2 and 420-3 according to an embodiment of the disclosure may be formed by a method of applying a coating layer and drying and/or curing the coating layer to form a film, such as by vacuum deposition, sputtering, and/or wet coating. However, the disclosure is not limited to the above forming and/or coating methods, and any method of forming and/or coating the anti-reflection coating layer that may be readily selected by a person of ordinary knowledge in the art is to be construed as falling within the scope of the disclosure.

The anti-reflection coating layers 420-2 and 420-3 according to an embodiment of the disclosure may be formed of and/or coated with, for example, but not limited to, magnesium fluoride (MgF₂), silicon (Si), or silicon dioxide (SiO₂), and any anti-reflection coating layer material that may be readily selected by a person of ordinary knowledge in the art is to be construed as falling within the scope of the disclosure.

In case that the reflectivity of the anti-reflection coating layers 420-2 and 420-3 according to an embodiment of the disclosure is excessively high, the amount of welding light passing through the light shield cartridge structure 420 is insufficient, thereby reducing the clarity of the image. In case that the reflectivity of the anti-reflection coating layers 420-2 and 420-3 is excessively low, the efficiency of the anti-reflection coating layers 420-2 and 420-3 is reduced, thereby failing to overcome ghosting, and thus, the reflectivity may be set to less than 4%, less than 3.5%, less than 3%, or less than 1.0%.

The refractive index of the anti-reflection coating layers 420-2 and 420-3 according to an embodiment of the disclosure may be from 1.3 to 1.36.

The anti-reflection coating layers 420-2 and 420-3 according to an embodiment of the disclosure may include a single layer or a plurality of layers, in which at least two layers of the plurality of layers may be set to different refractive indices.

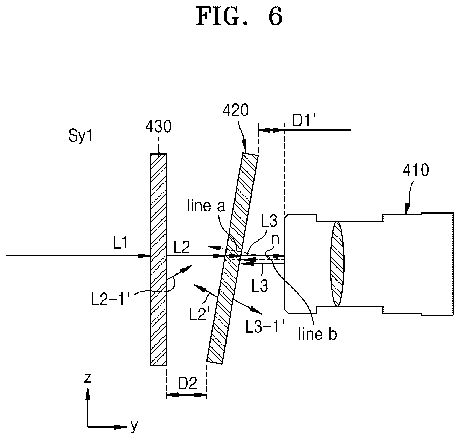

Referring to FIG. 6, the light shield cartridge structure 420 according to an embodiment of the disclosure may be configured such that a virtual first-1 line (line a) perpendicular to a major surface of the light shield cartridge structure 420 intersects a virtual second line (line b) connecting the camera and the light source W. The virtual second line (line b) may be, for example, an optical axis.

As used herein, the term "major surface" may refer to the widest surface of a film, a film structure, a thin film, a film, a layer, or a similar structure having a wide surface.

As used herein, the term "light source" may refer to any object or tool which emits light, such as a location where welding which is photographed by an operator is taking place or an object which is being welded to produce welding light.

In case that the lines b and a intersect as in the above structure, in a case in which the welding light L2' reflected from a surface of the light shield cartridge structure 420 reaches the cover plate 430 and is reflected L2-1' from the cover plate 430, the reflected light L2-1' is not directed to the camera 410, which may minimize primary ghosting as described above (see FIG. 6).

In case that the lines b and a intersect as in the above structure, even in a case in which the reflected welding light L3' reaches and is then reflected from the light shield cartridge structure 420, the welding light L3-1' reflected from an area of the camera 410 may not be directed to the camera 410, thereby also minimizing secondary ghosting (see FIG. 6).

According to an embodiment, the angle n defined by the lines b and a may be from 0 to 10 degrees. By providing the above structure, ghosting may be minimized even in a case in which welding light is reflected from the cover plate 430 and/or the light shield cartridge structure 420.

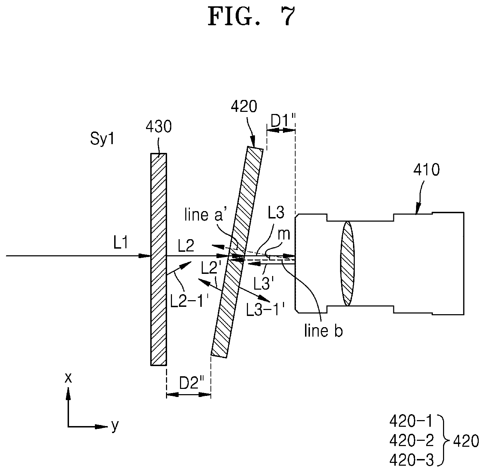

FIG. 6 is a view of a path of travel of welding light in the y-z direction in which the camera 410 is shown in a side direction, and FIG. 7 is a view of a path of travel of welding light in the y-x direction in which the camera 410 is shown in a top-down direction.

Referring to FIG. 7, the light shield cartridge structure 420 according to an embodiment may be configured such that a virtual first-2 line (line a') perpendicular to a major surface of the light shield cartridge structure 420 intersects a virtual second line (line b) connecting the camera 410 and the light source W. In this case, the line a, the line a', and the line b may intersect each other.

Here, the angle m defined by the line a' and the line b may be determined independently of the angle n defined by the line a and the line b.

As in the above structure, by varying the angle between the light shield cartridge structure 420 and the camera 410 and/or the cover plate 430, a camera system able to minimize ghosting may be provided by taking into account the location where the camera system is operated, the magnitude of the welding environment, and the like.

Although not shown in the drawings, the camera system according to an embodiment of the disclosure may further include a controller (not shown) which controls the angle n defined by the lines a and b and/or the angle m defined by the lines a' and b. In the camera system, the paths through which welding light enters may vary depending on the location where the image capturing portion is disposed, and by providing the above structure, an effect of preventing ghosting may be provided depending on the location of use.

In the camera system according to an embodiment of the disclosure, a driver (not shown) which adjusts the angle of provision of the light shield cartridge structure 420 may further be provided on a portion of the light shield cartridge structure 420. For example, the driving range of at least one of the angle n and the angle m may be set to the range of 4 degrees or more.

It is to be understood that the controller and the driver are not particularly limited, and any configuration that allows the surface and/or the angle of disposition of the panel and/or the thin film to be controlled and that may be readily selected by a person of ordinary knowledge in the art of the disclosure is within the scope of the disclosure.

Referring again to FIG. 5, in an embodiment, the distance D1 between an area of the light shield cartridge structure 420 and the camera 410 may be less than the distance D2 between another area of the light shield cartridge structure 420 and the cover plate 430. Referring to FIG. 5, in an optional embodiment, D1 may refer to the distance between the second coating layer 420-3 and the camera 410. In another optional embodiment, D1 may refer to the distance between the second coating layer 420-3 and the lens of the camera 410.

Although not shown in the drawings, in an optional embodiment, the area of the light shield cartridge structure 420 and a portion of the camera 410 may be in contact or close contact, and in another optional embodiment, the area of the light shield cartridge structure 420 and a portion of the lens of the camera 410 may be in contact or close contact. Reducing D1 as in the above structure may minimize the amount of the welding light L3' reflected from the camera 410, thereby minimizing ghosting.

Referring again to FIG. 6, in an embodiment, the minimum distance D1' between an area of the light shield cartridge structure 420 and the camera 410 may be less than the minimum distance D2' between another area of the light shield cartridge structure 420 and the cover plate 430.

Although not shown in the drawings, in an optional embodiment, the area of the light shield cartridge structure 420 and at least a portion of the camera 410 may be in contact or close contact. Reducing D1' as in the above structure may minimize the amount of the welding light L3' reflected from the camera 400, thereby reducing ghosting.

Referring again to FIG. 7, in an embodiment, the minimum distance D1" between an area of the light shield cartridge structure 420 and the camera 410 may be less than the minimum distance D2" between another area of the light shield cartridge structure 420 and the cover plate 133.

Although not shown in the drawings, in an optional embodiment, the area of the light shield cartridge structure 420 and at least a portion of the camera 410 may be in contact or close contact. Reducing D1" as in the above structure may minimize the amount of the welding light L3' reflected from the camera 410, thereby reducing ghosting.

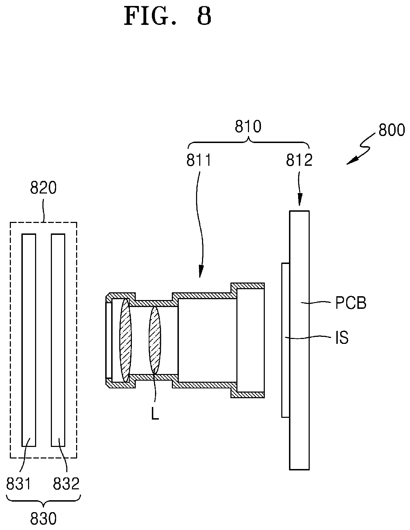

FIG. 8 is a conceptual view illustrating another example of a camera system according to an embodiment of the disclosure.

Referring to FIG. 8, the camera system 800 may include a camera 810 and a light shield cartridge structure 820.

The camera 810 may include a lens assembly 811 and a substrate assembly 812.

The lens assembly 811 may include an actuator and one or more lenses accommodated in the actuator. The actuator may include an autofocusing actuator and/or a vibration compensating actuator, and may be configured such that the autofocusing actuator and the vibration compensating actuator are integrally provided.

The substrate assembly 812 may have a structure in which an image sensor IS is coupled to the top of a PCB substrate having a conductive wiring pattern formed thereon.

The light shield cartridge structure 820 may include a filter 830.

The filter 830 may perform a function of blocking welding light generated during the welding operation. The camera 810 may use the filter 830 to capture a welding image in which an amount of welding light is blocked. The filter 830 may have a structure in which the filter 830 is disposed in front of the camera, specifically, positioned in front of the lens which receives light from a subject.

In an embodiment, the filter 830 may include a blackening filter 832. The blackening filter 832 may block welding light generated during the welding of the operator. For example, the blackening filter 832 may blacken based on welding light information detected by the sensor 130, such as a photosensor, to increase the shading degree of the blackening filter 832. In this case, the blackening filter 832 may include, for example, an LCD panel in which the blackening concentration may be adjusted according to the alignment orientation of liquid crystals. However, the LCD panel is not limited thereto, and may be implemented as various LCD panels, such as a vertical alignment (VA) panel, a twist nematic (TN) panel, and an in-plane switching (IPS) panel.

The blackening concentration of the blackening filter 832 may be automatically adjusted according to the presence or absence of welding light or the intensity of welding light. As described above, the sensor (see the sensor 130 in FIG. 2) may be used in case that the brightness of welding light is automatically adjusted. The photosensor of the sensor 130 may obtain the welding light information by detecting the presence or absence of welding light or the intensity of welding light, and convert welding light intensity information included in the welding light information into an electrical signal. The sensor 130 may transfer the converted electrical signal to the processor (e.g., the processor 150 in FIG. 2), and the processor may control the blackening concentration based on the intensity of welding light.

For example, the blackening filter 832 may change the shading degree of the panel in real time to correspond to the intensity of light generated from the welding surface at a welding work site, and the camera 810 may capture a welding image in which an amount of welding light is blocked by the blackening filter 832 provided on the front side.

In another embodiment, the filter 830 may further include a neutral density filter 831. The neutral density filter 831 may reduce the intensity of welding light generated by the operator and transfer the reduced intensity welding light to the camera 810. The neutral density filter 831 may reduce the intensity of welding light based on a selected neutral density. For example, in a case in which the neutral density filter 831 having a neutral density of 50% is used, the intensity of welding light may be reduced more than in a case in which a neutral density filter 831 having a neutral density of 15% is used.

The filter 830 may have a structure which allows the neutral density filter 831 to be replaced. The neutral density filter 831 may be replaced with another neutral density filter as desired.

In another embodiment, the neutral density filter 831 may be a digital filter, in which the neutral density is controlled by a processor. Like the blackening filter 832, the neutral density filter 831, which is a digital filter, may increase the neutral density based on the welding light information detected by the sensor 130, such as a photosensor, to increase the shading degree of the neutral density filter 831.

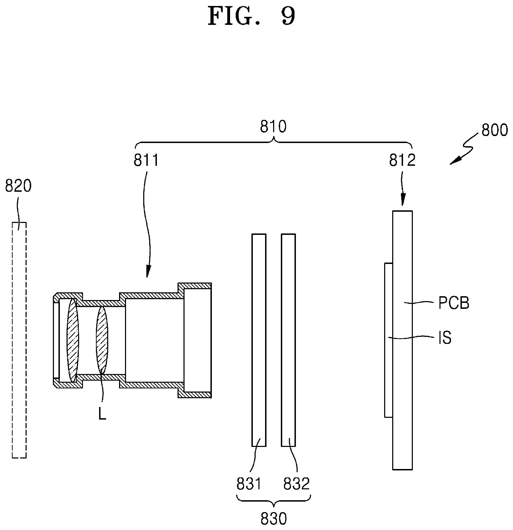

In another embodiment, referring to FIG. 9, the filter 830 may include a structure configured to be coupled to the camera 810. In this case, the light shield cartridge structure 820 may include, but is not limited to, an LCD protection panel, the blackening concentration of which may be adjusted, and may also include a typical panel, the blackening concentration of which may be fixed or not adjusted. In such cases, ghosting may also be minimized using the anti-reflection coating layer disposed on one surface of the conventional panel.

The filter 830 may be disposed on a path of light traveling in the camera 810 and, more specifically, in the lens assembly 811. That is, the filter 830 may be disposed in front of, but not limited to, the lens assembly 811 in the camera 810 or the light shield cartridge structure, and may be disposed between the lens assembly 811 and the image sensor IS in the camera 810 to perform the light blocking function. For example, the filter 830 may have a separate housing which forms the contour of the filter 830, and may have a shape that allows the filter 830 to be coupled to the camera 810. The filter 830 may be coupled to the front of the camera 810 (or the light shield cartridge structure), or may be disposed between and coupled to the lens assembly 811 and the image sensor IS of the camera 810. In another embodiment, the filter 830 may be provided integrally with the lens assembly 811 of the camera 810. The blackening filter 832 and the variable neutral density filter 831 of the filter 830 may be disposed on the optical axis of a lens L and combined into a single housing. In this case, the filter 830 may be provided in a circular shape similar to the shape of the lens L. However, the filter 830 is not limited thereto, and may be formed in a shape other than the lens L, such as an oblong shape. In this case, the lens assembly 811 may have an internal housing structure which may accommodate both the circular lens L and the oblong filter 830.

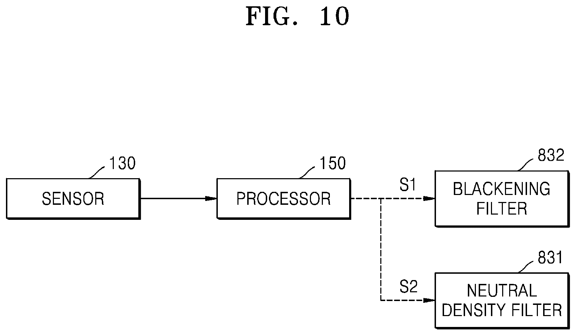

FIG. 10 is a block diagram illustrating a method of controlling a filter in a camera system according to an embodiment of the disclosure.

Referring to FIG. 10, the camera system may obtain welding light information using the sensor 130. In this case, the sensor 130 may include a photosensor (e.g., an illumination sensor) to detect the presence or absence or the intensity of welding light. The sensor 130 may convert the presence or absence or the intensity of welding light into an electrical signal and transfer the electrical signal to the processor 150.

In case that the electrical signal is received from the sensor 130, the processor 150 may generate a control signal and transfer the control signal to the filter (830 in FIG. 8). In this case, the filter 830 may include the blackening filter 832 and the neutral density filter 831 which are controllable. The processor 150 may adjust both the blackening concentration of the blackening filter 832 and the neutral density filter 831 based on the intensity of the detected welding light. In an embodiment, in case that welding light is detected by the sensor 130 and the intensity of the welding light is greater than a selected first intensity, the processor 150 may generate a first control signal S1 and a second control signal S2 to control both the blackening filter 832 and the neutral density filter 831 to operate. Furthermore, in case that welding light is detected by the sensor 130 and the intensity of the welding light is less than the selected first intensity and greater than a selected second intensity, the processor 150 may generate the second control signal S2 to control only the neutral density filter 831 or the first control signal S1 to control only the blackening filter 832.

Furthermore, in case that welding light is not detected by the sensor 130 or the intensity of the welding light is less than the selected second intensity, the processor 150 may not separately control the neutral density filter 831 or the blackening filter 832 and allow the welding light to be transferred as is to the camera (810 in FIG. 8).

As described above, the camera system according to an embodiment of the disclosure may have the filter capable of blocking welding light disposed in front of the camera to obtain a welding image in which an amount of welding light is blocked without having to separately process the captured image. Furthermore, the camera system may be provided with the blackening filter and the neutral density filter to control the blackening concentration or the neutral density according to the presence or absence or the intensity of welding light, thereby effectively controlling the degree of blocking.

The processor 150 may further control the sensor filter (not shown) based on the intensity of welding light detected by the sensor 130 to adjust the blackening concentration of the sensor filter. For example, in case that the intensity of the detected welding light is greater than the selected first intensity, the processor 150 may generate a third control signal S3 to control the sensor filter to operate, thereby reducing the amount of light sent to the sensor 130.

In an embodiment, the processor 150 may adjust the blackening concentration of the sensor filter to be the same as the blackening concentration of the blackening filter 832 based on the intensity of the detected welding light, but is not limited thereto, and may adjust the blackening concentration of the sensor filter differently. For example, the processor 150 may adjust the blackening concentration of the sensor filter to be the same as the blackening concentration of the blackening filter 832 in case that the result of subtracting the selected first intensity from the intensity of the detected welding light is less than a selected threshold, but may adjust the blackening concentration of the sensor filter to be higher than the blackening concentration of the blackening filter 832 in case that the result of subtracting the selected first intensity from the intensity of the detected welding light is equal to or greater than the selected threshold.

In an embodiment, the processor 150 may adjust the blackening concentration of the blackening filter 832 and the sensor filter based on the intensity of the detected welding light, but may adjust the blackening concentration differently based on the ratio of the size of the blackening filter 832 relative to the sensor filter. For example, the smaller the ratio of the size of the sensor filter relative to the blackening filter 832, the lower the blackening concentration may be adjusted by the processor 150. Furthermore, the blackening concentration of the sensor filter may be adjusted by, but not limited to, the processor 150 and may have a selected blackening concentration.

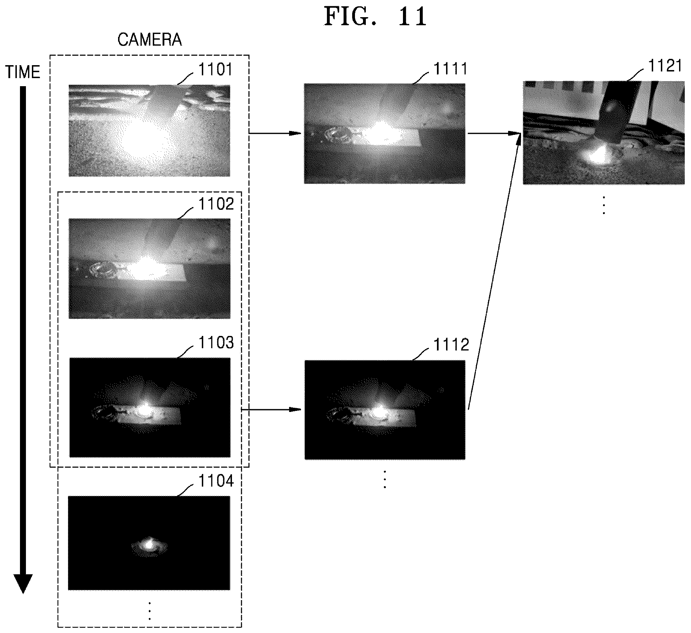

FIG. 11 is a view illustrating an example in which a camera system according to an embodiment of the disclosure generates combined images.

Referring to FIG. 11, the camera system may obtain a plurality of image frames by capturing images of the work area based on set image capturing conditions using the camera. Here, the image capturing conditions may include, for example, an ISO sensitivity, a gain, a shutter speed, and the like. The plurality of image frames may include, for example, first to fourth image frames 1101 to 1104 captured at set time intervals.

The processor of the camera system may select the first to third image frames 1101, 1102, and 1103 of the plurality of image frames based on set criteria (e.g., the number of specified image frames and selecting image frames in each of which a pixel difference from another image frame (e.g., a previous image frame) is in a set range) and synthesize the first to third image frames 1101, 1102, and 1103 to generate a first combined preprocessed image 1111. The processor of the camera system may select the second to fourth image frames 1102, 1103, and 1104 of the plurality of image frames based on the set criteria and combine the second to fourth image frames 1102, 1103, and 1104 to generate a second combined preprocessed image 1112. The processor of the camera system may synthesize the first combined preprocessed image 1111 and the second combined preprocessed image 1112 to generate a first combined image 1121.

In case that a fifth image frame (not shown) is obtained, the processor of the camera system may select the third to fifth image frames of the plurality of image frames and synthesize the third to fifth image frames to generate a third combined preprocessed image (not shown). The processor of the camera system may synthesize the second combined preprocessed image 1112 and the third combined preprocessed image to generate a second combined image (not shown).

In an embodiment, the processor of the camera system may generate the first combined preprocessed image 1111 and the second combined preprocessed image 1112 in parallel, and may also generate the first combined image 1121 and the second combined image in parallel. The processor of the camera system may generate a plurality of combined images at the same rate as the camera capturing image frames by performing parallel image synthesis with a difference of one frame.

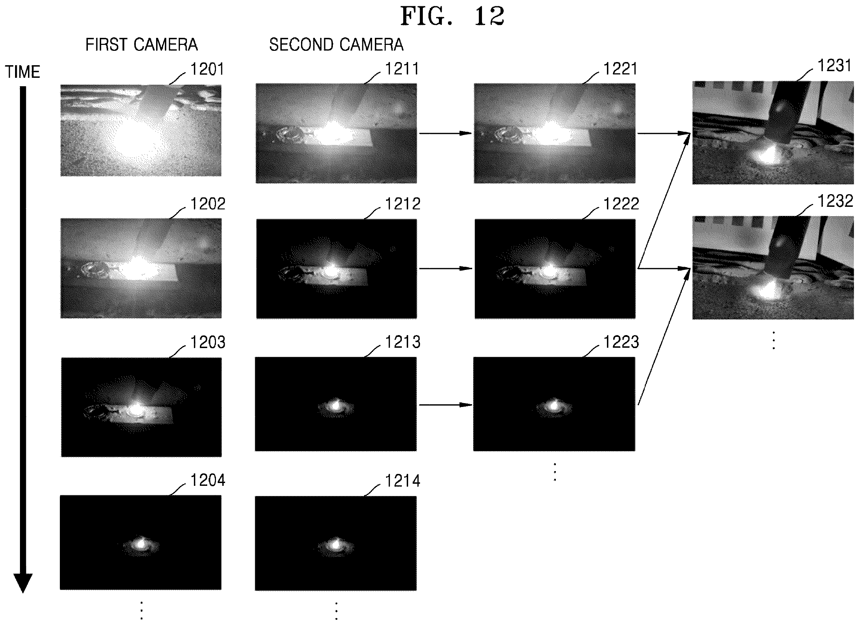

FIG. 12 is a view illustrating another example in which a camera system according to an embodiment of the disclosure generates combined images.

Referring to FIG. 12, the camera system may obtain a plurality of image frames by capturing images of the work area using the first camera and the second camera, respectively, based on set image capturing conditions. The first camera and the second camera may capture images of the welding situation under different image capturing conditions in the same time frame. For example, the first camera may capture first to fourth image frames 1201 to 1204 under a first image capturing condition, and the second camera may capture the first to fourth image frames 1211 to 1214 under a second image capturing condition.

In another embodiment, the camera system may capture images of the welding situation under the same image capturing conditions in the same time frame, but may capture images of the welding situation under different image capturing conditions in different time frames. For example, the first camera and the second camera may capture a first image frame 1201 and a first image frame 1211, respectively, under a first image capturing condition, and a second image frame 1202 and a second image frame 1212, respectively, under a second image capturing condition. The first camera and the second camera may also capture a third image frame 1203 and a third image frame 1213, respectively, under a third image capturing condition. Thereafter, the first camera and the second camera may capture a fourth image frame 1204 and a fourth image frame 1214, respectively, again under the first image capturing condition.

In an embodiment, the first image capturing condition may be set to, for example, a faster shutter speed, a higher sensitivity, and a higher gain than those of the second image capturing condition, and the third image capturing condition may be set to, for example, a slower shutter speed, a lower sensitivity, and a lower gain than those of the second image capturing condition. These image capturing conditions are illustrative only, and the camera may obtain images under various image capturing conditions.

The processor of the camera system may synthesize the first image frame 1201 obtained by the first camera and the first image frame 1211 obtained by the second camera to generate a first combined preprocessed image 1221, and may synthesize the second image frame 1202 obtained by the first camera and the second image frame 1212 obtained by the second camera to generate a second combined preprocessed image 1222. The processor of the camera system may synthesize the first combined preprocessed image 1221 and the second combined preprocessed image 1222 to generate a first combined image 1231. The processor of the camera system may also synthesize the second combined preprocessed image 1222 and a third combined preprocessed image 1223 to generate a second combined image 1232.

In an embodiment, the processor of the camera system may select two or more combined preprocessed images from a plurality of combined preprocessed images based on set criteria and synthesize the selected combined preprocessed images to generate a combined image. In this case, the processor of the camera system selects three combined preprocessed images from the plurality of combined preprocessed images and generates a combined image based on the selected combined preprocessed images, in which the processor may deselect a combined preprocessed image from the combined preprocessed images in which a pixel difference between one image frame and another image frame (e.g., a previous image frame) is less than a set minimum value or is equal to or greater than a set maximum value.

The camera system according to an embodiment of the disclosure may generate a combined image by synthesizing a plurality of image frames by an HDR method, thereby obtaining a high resolution combined image, as shown in FIGS. 11 and 12. By providing the above-described high resolution combined image to an external device, there is an effect of enabling easy identification of a peripheral portion other than the portion adjacent to welding light.

The camera system according to an embodiment of the disclosure may process images obtained by the camera based on HDR technology to generate and provide high resolution welding images which may clearly show the welding environment.

The camera system according to an embodiment of the disclosure may adjust the inclination of the light shield cartridge structure to minimize unnecessary light reflected from the camera back into the camera, thereby reducing ghosting that would be caused by unwanted light sources during generation of welding images.

Furthermore, the camera system according to an embodiment of the disclosure may include the blackening filter and the neutral density filter to control the blackening concentration or the neutral density according to the presence or absence or the intensity of welding light, thereby providing a welding image in which an amount of welding light is blocked without having to separately process the captured welding image.

According to an embodiment of the disclosure, images obtained by the camera based on HDR technology may be processed to generate and provide high resolution welding images which may clearly show the welding environment.

According to an embodiment of the disclosure, the inclination of the light shield cartridge structure may be adjusted to minimize unnecessary light reflected from the camera back into the camera, thereby reducing ghosting that would be caused by unwanted light sources during generation of welding images.

Furthermore, according to an embodiment of the disclosure, the blackening filter and the neutral density filter may be provided to control the blackening concentration or the neutral density according to the presence or absence or the intensity of welding light, thereby providing a welding image in which an amount of welding light is blocked without having to separately process the captured welding image.

The effects of the disclosure are not limited to those described above, and other technical effects not mentioned will be apparent to a person of ordinary knowledge in the art from the following description.

The embodiments of the disclosure described above may each be implemented in the form of a computer program executable via various elements on a computer, and such a computer program may be recorded on a computer readable medium. Examples of the computer readable medium may include a magnetic medium, such as a hard disk, a floppy disk, or a magnetic tape; an optical medium, such as a compact disk-read-only memory (CD-ROM) or a digital versatile disk (DVD); a magneto-optical medium, such as a floptical disk; and a hardware device specially configured to store and execute program commands, such as a ROM, a random-access memory (RAM), or a flash memory.

The computer program may be specially designed and configured for the disclosure or may be well-known to and be usable by a person of ordinary knowledge in the art of computer software. Examples of the computer program may include machine language code, such as that created by a compiler, as well as high-level language code executable by a computer using an interpreter or the like.

The use of the term "the" and similar reference terms in the specification (particularly the claims) of the disclosure may cover both the singular and the plural. Furthermore, the specification of a range in the disclosure includes inventions in which individual values within the range are applied (unless otherwise indicated), as if each individual value within the range were specified in the detailed description.

The steps/operations of the methods according to the disclosure may be performed in any reasonable order, unless an order is explicitly stated or implied for the steps/operations. The disclosure is not necessarily limited by the order in which the steps are described. The use of any examples or illustrative terms (such as "for example" or "and/or the like") in the disclosure is merely for the purpose of describing the disclosure in detail and is not intended to limit the scope of the disclosure unless defined by the claims. Furthermore, a person of ordinary knowledge in the art will appreciate that various modifications, combinations, and changes are possible in accordance with the design conditions and factors within the scope of the appended claims or equivalents thereof.

Accordingly, the ideas of the disclosure are not to be limited to the embodiments described above, and it will be understood that not only the following claims, but also any scope equivalent to or equivalently modified from the claims, are within the scope of the ideas of the disclosure.

## Claims

1. A camera system comprising:
a light shield disposed between a camera and a light source and comprising a light shield cartridge structure configured to control light entering the camera;
an image capturing portion comprising the camera configured to obtain a plurality of image frames; and
a processor configured to generate a plurality of combined preprocessed images based on two or more image frames selected from the plurality of image frames based on set criteria and synthesize the plurality of combined preprocessed images to generate at least one combined image.

2. The camera system of claim 1, wherein
the plurality of combined preprocessed images comprise a first combined preprocessed image and a second combined preprocessed image, and
the processor is further configured to
generate the first combined preprocessed image based on two or more first image frames selected from the plurality of image frames based on the criteria,
generate the second combined preprocessed image based on the two or more second image frames selected from the plurality of image frames based on the criteria, and
synthesize the first combined preprocessed image and the second combined preprocessed image to generate the combined image.

3. The camera system of claim 1, wherein the light shield cartridge structure comprises a blackening filter and an anti-reflection coating layer disposed on at least one surface of the blackening filter.

4. The camera system of claim 3, wherein the light shield cartridge structure further comprises a neutral density filter disposed in front of the blackening filter.

5. The camera system of claim 1, wherein the light shield cartridge structure is disposed such that a virtual line perpendicular to a major surface of the light shield cartridge structure intersects a virtual line connecting a lens of the camera and the light source.
